# EUROPÄISCHE PATENTSCHRIFT

(11) **EP 2 855 948 B1**
(45) Veröffentlichungstag und Bekanntmachung des Hinweises auf die Patenterteilung: **03.01.2018**
(21) Anmeldenummer: 13725278.9
(22) Anmeldetag: 24.05.2013
(51) Int. Cl.: F16B 5/07, F16B 21/08, F16B 43/00

(54) **BEFESTIGUNGSSYSTEM**
FASTENING SYSTEM
SYSTÈME DE FIXATION

(30) Priorität: 01.06.2012 DE 102012010893
(43) Veröffentlichungstag der Anmeldung: 08.04.2015
(73) Patentinhaber: Gottlieb Binder Gmbh & Co. Kg, 71084 Holzgerlingen (DE)
(72) Erfinder: TUMA, Jan, 71083 Herrenberg (DE)
(74) Vertreter: Bartels, Martin Erich Arthur
(86) Internationale Anmeldenummer: PCT/EP2013/001531
(87) Internationale Veröffentlichungsnummer: WO 2013/178339

(56) Entgegenhaltungen:
- EP-A1- 0 465 983
- EP-A1- 0 904 707
- EP-A1- 1 481 603
- EP-A2- 0 921 323
- WO-A1-98/46417
- WO-A1-2005/113989
- DE-A1- 19 519 623
- DE-A1- 19 820 512
- FR-A1- 2 470 831
- FR-A1- 2 868 135
- GB-A- 2 124 293
- JP-U- S5 731 250
- JP-U- S63 167 904
- US-A- 4 077 072
- US-A- 4 531 733

## Beschreibung

Die Erfindung betrifft eine Befestigungsvorrichtung mit den Merkmalen im Oberbegriff des Patentanspruchs 1.

Befestigungsvorrichtungen der vorstehend genannten Art sind Stand der Technik, siehe DE 10 2008 007 913 A1 oder DE 10 2010 027 394 A1. Als Bestandteil einer Anzahl von Befestigungseinheiten eines Befestigungssystems lassen sich solche Befestigungsvorrichtungen unter anderem dazu einsetzen, um an vorgebbaren Stellen von Bauteilen, seien es Teile von Kraftfahrzeugen, Eisenbahnen, Schiffen oder von Flugzeugen, Drittbauteile festzulegen. Bei derartigen Drittbauteilen kann es sich beispielsweise um Blenden an Karosserieteilen von Kraftfahrzeugen, um Paneele oder um andere flächenartige Verkleidungen handeln, beispielsweise um unschön aussehende Stellen zu kaschieren, oder auch um flächenartige Verkleidungen zur Wärme- und/oder Schallisolation.

Dadurch, dass die Verbindung zwischen dem betreffenden Bauteil und dem daran festzulegenden Drittbauteil anstatt durch Verschrauben, Nieten oder Nageln durch eine Haftverbindung erfolgt, indem Haft- oder Verhakungselemente, die sich an einem Haftverschlussteil des Halteteiles der Befestigungsvorrichtung befinden mit einem korrespondierenden Haftverschlussteil am Drittbauteil in Hafteingriff gebracht werden, ergibt sich zum einen eine wesentliche Verringerung des Montageaufwandes und zum anderen der besondere Vorteil, dass bei der Herstellung der Haftverbindung Positionstoleranzen zwischen Bauteil und Drittbauteil über das Befestigungssystem ausgleichbar sind, so dass auch eine rationellere und kostengünstigere Fertigung erreichbar ist, weil nicht auf enge Toleranzgrenzen zu achten ist.
Die JP S57 31250 U offenbart eine gattungsgemäße Befestigungsvorrichtung, bestehend aus mindestens einem an einem Bauteil anbringbaren Halteteil, das an einer Seite ein flächiges Trägerteil aufweist, das mit an einer Seite vorstehenden Haft- oder Verhakungselementen versehen ist und an der gegenüberliegenden Seite mindestens ein Befestigungsmittel in Form eines hohlen Zapfens für den Eingriff in ein Befestigungsloch des Bauteils aufweist, wobei zumindest am Zapfen eine Dichteinrichtung in Form eines elastisch nachgiebigen Flachringes als Dichtring zur Abdichtung zwischen dem Halteteil und dem Befestigungsloch vorhanden ist, der von dem Zapfen durchgriffen ist.
Ausgehend von diesem Stand der Technik stellt sich die Erfindung die Aufgabe, eine Befestigungsvorrichtung der eingangs genannten Art zur Verfügung zu stellen, die sich gegenüber dem Stand der Technik durch universellere Einsatzmöglichkeiten auszeichnet.
Erfindungsgemäß ist diese Aufgabe durch eine Befestigungsvorrichtung gelöst, die die Merkmale des Patentanspruches 1 in seiner Gesamtheit aufweist.

Es ist demgemäß vorgesehen, dass zumindest am Befestigungsmittel eine Dichteinrichtung vorhanden ist. Dadurch lässt sich die erfindungsgemäße Befestigungsvorrichtung ohne Schwierigkeiten auch an Stellen einsetzen, an denen ein schädlicher Zutritt von Medien, wie Feuchtigkeit, über das Befestigungsmittel zum Drittbauteil vermieden werden muss. Bei der bekannten Lösung gemäß DE 10 2008 007 913 A1 ist zur Vermeidung eines Flüssigkeitszutrittes als Befestigungsmittel eine Klebeverbindung zwischen dem betreffenden Bauteil und dem Halteteil vorgesehen. Um einen sicheren Einsatz auch unter Einsatzbedingungen, bei denen besondere thermische Belastungen auftreten können, wie dies beispielsweise bei Kraftfahrzeuganwendungen der Fäll ist, zu gewährleisten, muss hierbei jedoch ein temperaturfester Klebstoff benutzt werden, wodurch der Nachteil hoher Kosten entsteht.
Das Befestigungsmittel weist mindestens einen vorspringenden, für den Eingriff in ein Befestigungsloch des Bauteils vorgesehenen Zapfen auf, wobei die Dichteinrichtung eine Abdichtung zwischen dem Halteteil und dem Befestigungsloch bildet. Die Anordnung ist dabei so getroffen, dass die Dichteinrichtung ein auf dem Zapfen angeordnetes Dichtelement aufweist.
Eine besonders einfache und sichere Abdichtung ist dadurch realisiert, dass auf dem jeweiligen Zapfen als Dichtelement ein Dichtring angeordnet ist.
Als Sicherungsteil sind zwei sich vom Zapfen nachgiebig abspreizende Rastnasen vorgesehen, die bei der in das Befestigungsloch eingesetzten Sicherungsposition den Rand des betreffenden Befestigungsloches hintergreifen.

Die beiden Rastnasen sind dabei diametral zueinander am Zapfen angeordnet.

Für eine besonders rationelle und kostengünstige Fertigung sind Halteteile, Zapfen und Rastnasen einstückig, insbesondere aus Kunststoff, geformt.

Unabhängig von der Gestaltung des jeweiligen Dichtelementes lässt sich die erfindungsgemäße Befestigungsvorrichtung auch in empfindlichen Bereichen, etwa an Stellen, die bei Fahrzeugen Feuchtigkeit und Verschmutzung ausgesetzt sind, mit geringem Aufwand einsetzen, wie etwa in Bereichen zwischen Rohbau-Karosseriesäulen und Schwellerblenden, wo eine sichere, feuchtigkeitsdichte Abdichtung an den jeweiligen Befestigungsstellen wichtig ist.

Hinsichtlich der Gestaltung des Befestigungsmittels ist die Anordnung mit Vorteil so getroffen, dass am Zapfen des Halteteiles mindestens ein Sicherungsteil in Form der beiden Rastnasen ausgebildet ist, dass bei Eingriff des Zapfens in das zugeordnete Befestigungsloch des Bauteiles mit diesem eine clipsartige Rastverbindung bildet. Die Verbindung mittels Verclipsen ist mit geringstem Montageaufwand schnell und rationell durchführbar.

Bei einer besonders bevorzugten Ausführungsform der erfindungsgemäßen Befestigungsvorrichtung ist vorgesehen, dass der axiale Abstand zwischen der Unterseite der jeweiligen Rastnase und der zugewandten Oberseite des Trägerteils kleiner gewählt ist als die Summe der Dicken-Maße von der vorzugsweise elastisch nachgiebig ausgebildeten Dichteinrichtung in deren nicht komprimierten Ausgangszustand und dem Bauteil im angrenzenden Bereich seines Befestigungsloches. Besonders bevorzugt ist des Weiteren vorgesehen, dass bei am Bauteil festgelegtem Halteteil die Dichteinrichtung am Trägerteil ebenso flächig anliegt, wie am Bauteil auf dessen einer Seite und dass das jeweilige Sicherungsteil auf der gegenüberliegenden Seite des Bauteils, das der Dichteinrichtung abgewandt ist, an diesem Bauteil mit einer vorgebbaren Haltekraft angreift, die sich aus der Rückstellkraft der elastisch vorgespannten Dichteinrichtung in deren festgelegtem Zustand am Bauteil ergibt.

Mit den vorstehend beschriebenen Maßnahmen lässt sich unter Einsatz der elastisch nachgiebigen und sich insoweit in eine Ursprungslage rückstellenden Dichteinrichtung eine Vorspannung im Bereich der gegeneinander abzudichtenden Komponenten herstellen, was insoweit die Dichtkraftwirkung erhöht.

Weiterhin kann die Anordnung mit Vorteil so getroffen sein, dass das jeweilige Trägerteil aus einer flachen Trägerplatte gebildet ist oder zur Bildung eines Abstands zwischen seiner zur Anlage am Bauteil vorgesehenen Grundfläche und dem zugehörigen, die Haft- oder Verhakungselemente aufweisenden Haftverschlussteil als Distanzkörper ausgebildet ist, der eine rechteckige Form mit einer die Auflagefläche für das Haftverschlussteil bildenden, randseitig von einem vorstehenden Rahmen eingefasste Vertiefung aufweist.

Weiterhin kann die Anordnung mit Vorteil so getroffen sein, dass das Halteteil zur Bildung eines Abstandes zwischen seiner zur Anlage am Bauteil vorgesehenen Grundfläche und dem zugehörigen, die Haft- oder Verhakungselemente aufweisenden Haftverschlussteil einen Distanzkörper aufweist, der eine rechteckige Form mit einer die Auflagefläche für das Haftverschlussteil bildenden, randseitig von einem vorstehenden Rahmen eingefasste Vertiefung aufweist. Durch einen derartigen Distanzkörper lassen sich ungleiche Bauhöhen, beispielsweise innerhalb des Drittbauteils, ausgleichen, wobei auch so vorgegangen werden kann, dass in der Bauhöhe unterschiedlich gestaltete Distanzkörper benutzt werden.

Ungeachtet dessen, ob das Halteteil eine durch einen Distanzkörper vergrößerte Bauhöhe besitzt oder nicht, ist die Anordnung mit Vorteil so getroffen, dass an der zur Anlage am Bauteil vorgesehenen rechteckförmigen Grundfläche des Halteteiles ein zentral angeordneter Zapfen als Befestigungsmittel vorgesehen ist.

Gegenstand der Erfindung ist gemäß dem Patentanspruch 8 auch ein Befestigungssystem, das mindestens eine Befestigungsvorrichtung nach einem der Patentansprüche 1 bis 7 aufweist. Nachstehend ist die Erfindung anhand von in der Zeichnung dargestellten Ausführungsbeispielen erläutert. Es zeigen:
- Fig. 1: in der Art einer Explosionszeichnung, schematisch vereinfacht und teils geschnitten, die wesentlichen Komponenten einer Befestigungseinheit eines Befestigungssystems mit einem Ausführungsbeispiel der erfindungsgemäßen Befestigungsvorrichtung;
- Fig. 2: nur diejenigen Komponenten der Befestigungseinheit von Fig. 1, die an dem Bauteil vormontiert angebracht sind, welches an dem Drittbauteil zu befestigen ist;
- Fig. 3: eine Seitenansicht lediglich einer ersten Ausführungsform des Halteteiles, das den Träger für das Haftverschlussteil bildet, das zur Anbringung am in der Figur rechtsseitig gelegenen Bauteil vorgesehen ist;
- Fig. 4: eine gegenüber Fig. 3 abgewandelte Ausführungsform des Trägers;
- Fig. 5: eine perspektivische Schrägansicht, gesehen auf die Oberseite des Trägers von Fig. 4, wobei das Haftverschlussteil weggelassen ist und
- Fig. 6: eine teils abgebrochene, gegenüber einer praktischen Ausführungsform etwa um den Faktor 2 vergrößert und in perspektivischer Schrägansicht in der Art einer Explosionsdarstellung gezeichnete Darstellung der für die Vormontage am Bauteil vorgesehenen Komponenten der Befestigungseinheit von Fig. 1.

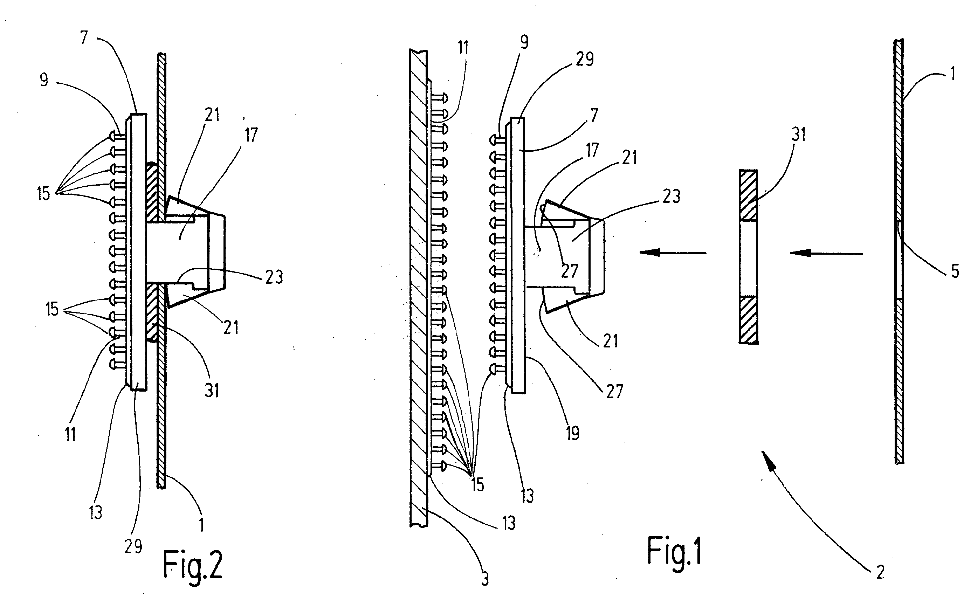

Die Fig. 1 zeigt die Komponenten einer Befestigungseinheit 2, die ein Ausführungsbeispiel der erfindungsgemäßen Befestigungsvorrichtung aufweist. In Fig. 1 sind die Komponenten in auseinandergezogener Stellung dargestellt. Dabei ist rechtsseitig ein Bauteil mit 1 bezeichnet, an dem mittels der Befestigungsvorrichtung ein in der Figur linksseitig gelegenes Drittbauteil 3 zu befestigen ist. Bei diesem kann es sich um eine Abdeckung, etwa in Form einer Blende, ein Paneel oder ein anderes Verkleidungselement oder dergleichen handeln, das als Drittbauteil 3 am Bauteil 1 zu befestigen ist. Letzteres kann ein Blechteil einer Rohkarosserie sein, beispielsweise Teil einer Karosseriesäule, an der das Drittbauteil 3 etwa in Form einer Schwellerblende zu befestigen ist. Das Bauteil 1 weist für jeweilige Befestigungseinheiten 2 des Systems, von denen in Fig. 1 lediglich eine Befestigungseinheit gezeigt ist, jeweils ein Befestigungsloch 5 auf. Dieses ermöglicht, wie nachstehend ausgeführt wird, eine Klippverbindung mit einem Halteteil in Form eines Trägers 7, an dem sich ein erstes Haftverschlussteil 9 befindet. Ein mit diesem Haftverschlussteil 9 korrespondierendes zweites Haftverschlussteil 11 ist am Drittbauteil 3 in einem mit dem Träger 7 in räumlicher Beziehung stehenden Flächenbereich angebracht, so dass zwischen erstem und zweitem Haftverschlussteil 9 und 11 ein Hafteingriff herstellbar ist, wenn das Drittbauteil 3 gegen den Träger 7 gedrückt wird. Wenn, wie in Fig. 1 gezeigt, das zweite Haftverschlussteil 11 flächenmäßig größer dimensioniert ist als der Träger 7 mit dem ersten Haftverschlussteil 9, kann der Hafteingriff auch bei gröberer Tolerierung der Positioniergenauigkeit zwischen Drittbauteil 3 und dem Träger 7 erfolgen.

Die Anbringung der Haftverschlussteile 9 und 11 am Träger 7 bzw. am Drittbauteil 3 erfolgt vorzugsweise in der Weise, dass die jeweilige, aus Kunststoff bestehende Trägerlage 13, mit der die pilzkopfartigen Verhakungselemente 15 verbunden sind, mit dem zugehörigen Träger 7 bzw. dem Drittbauteil 3 verklebt ist. Hierfür kann ein drucksensitiver Klebstoff auf Acrylatbasis oder ein sog. Kunstkautschuk-Klebstoff vorgesehen sein. Besonders bevorzugt finden jedoch Klebstoffe Anwendung auf der Basis eines feuchtigkeitsvernetzenden Polyurethans als Festverklebung.

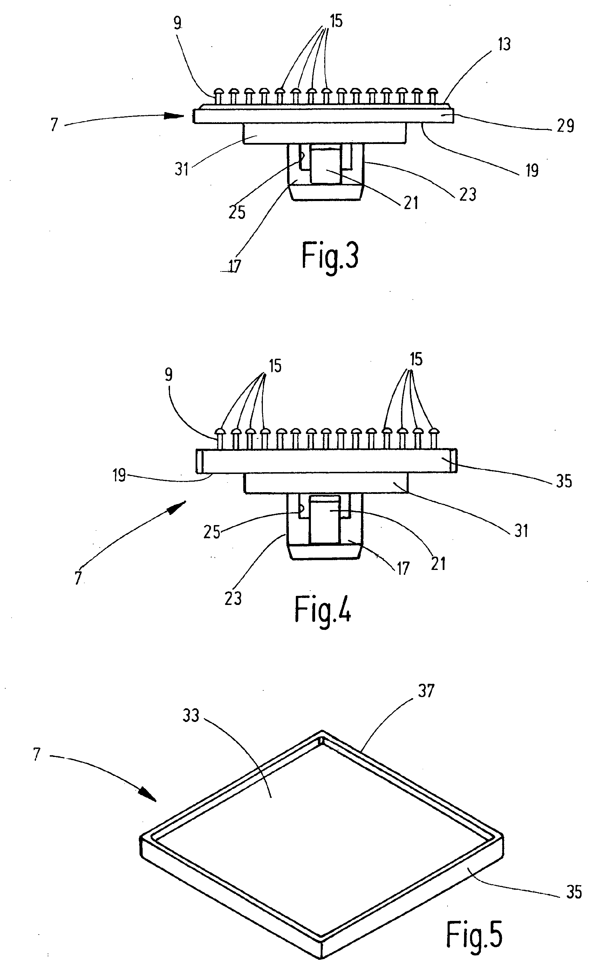

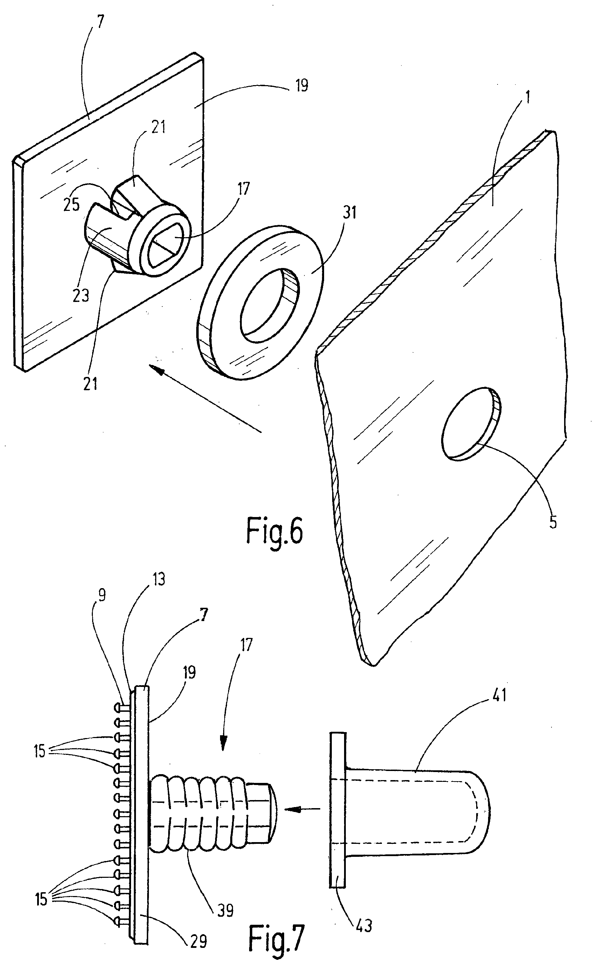

Das jeweilige Befestigungsloch 5 im Bauteil 1 dient, wie bereits erwähnt, zur Bildung einer Klippverbindung mit dem Träger 7 für das erste Haftverschlussteil 9. Bei den in Fig. 2 bis 6 gezeigten Ausführungsbeispielen weist der Träger 7 zur Bildung der Klippverbindung für jeden Träger 7 ein Befestigungsmittel in Form eines Zapfens 17 auf, der an der rechteckförmigen, genauer gesagt bei den gezeigten Ausführungsbeispielen im Umriss quadratischen, Grundfläche 19 an zentral gelegener Stelle vorspringt. Bei den hier gezeigten Ausführungsbeispielen ist der Zapfen 17 einstückig an dem Träger 7 angeformt, der als rationell herstellbares Spritzgussteil aus Kunststoff herstellbar ist, beispielsweise aus Polyamid 6 - Material oder aus einem ABS-Werkstoff, insbesondere aus PC-ABS-Werkstoff (Polycarbonat-AcrylNitril-Butadien-Styrol-Werkstoff). Wie am deutlichsten aus den Fig. 1, 2 und 6 entnehmbar ist, sind am Zapfen 17 als Sicherungsteile, die für die Klippverbindung mit dem Bauteil 1 beim Einstecken des Zapfens 7 in das zugeordnete Befestigungsloch 5 eine Sicherung durch Verklipsen bilden, Rastnasen 21 vorgesehen, die mit dem Zapfen 17 einstückig geformt, in Ausschnitten 25 des hohlen Zapfens 17 beweglich sind und sich voneinander weg abspreizen. Beim Einstecken des Zapfens 17 in das zugeordnete Befestigungsloch 5 werden die Rastnasen 21 zunächst gegeneinander bewegt und spreizen sich nach Durchtritt durch das Loch 5 wieder, so dass sie mit Rastflächen 27 den Öffnungsrand des Befestigungsloches 5 in der Sicherungsposition hintergreifen. Dieser Montagezustand ist in Fig. 2 dargestellt. Die Fig. 3, 4 und 6 zeigen die Form der Rastnasen 21 und der Ausschnitte 25, die sich beidseits der Rastnasen 21 in der kreiszylindrischen Wandfläche 23 des hohlen Zapfens 17 in Axialrichtung erstrecken.

Zur Bildung einer Abdichtung der Klippverbindung zwischen dem Träger 7 und dem Bauteil 1 ist eine der Klippverbindung zugehörige Dichteinrichtung vorgesehen. Diese weist bei den Ausführungsbeispielen von Fig. 1 bis 6 einen Dichtring 31 auf, der wie Fig. 1, 2 und 6 zeigen, die Form eines Flachringes besitzt, vorzugsweise aus einem synthetischen Kautschukmaterial. Der Dichtring 31 ist, wie Fig. 2 zeigt, auf dem Zapfen 17 so angeordnet, dass er an der Grundfläche 19 des Trägers 7 anliegt. Bei dem in Fig. 2 gezeigten, vormontierten Zustand, bei dem der Träger 7 am Bauteil 1 durch Verklipsen festgelegt ist, ist der nachgiebige Dichtring 31 zwischen der Grundfläche 19 des Trägers 7 und dem daran anliegenden Bauteil 1 gegenüber der in Fig. 1 gezeigten, unbelasteten Stärke derart flachgedrückt, dass zwischen Grundfläche 19 und Bauteil 1 eine gewünschte Dichtkraft wirksam ist. Zu diesem Zweck ist in Anpassung an die jeweilige Materialstärke des Bauteils 1 und die Dicke des Dichtringes 31 der Zapfen 17 des Trägers 7 derart dimensioniert, dass der axiale Abstand zwischen Grundfläche 19 und den Rastflächen 27 an den Rastnasen 21 nach dem Herstellen der Klippverbindung die gewünschte Vorspannung am Dichtring 31 erzeugt und dass dieser, wie Fig. 2 zeigt, gegenüber Fig. 1 entsprechend flachgedrückt ist.

Die Fig. 3 bis 5 zeigen unterschiedliche Ausführungsformen des Trägers 7. Dabei zeigt die Fig. 3 die gleiche Bauweise des Trägers, wie sie in Fig. 1 und 2 vorgesehen ist. Dabei bildet der Träger 7 zwischen der Grundfläche 19 und der Auflagefläche für die Lage 13 des Haftverschlussteils 9 eine verhältnismäßig flache Platte 29 quadratischen Umrisses. Demgegenüber zeigen Fig. 4 und 5 eine Bauweise, bei der der Träger 7 zwischen der Grundfläche 19 und der Auflagefläche 33 (Fig. 5) für das Haftverschlussteil 9 einen Distanzkörper 35 mit quadratischem Umriss aufweist. Der Distanzkörper 35 bildet ein kastenartiges Bauteil, bei dem ein vorstehender Rahmen 37 die Auflagefläche 33 für das Haftverschlussteil 9, das in Fig. 5 nicht gezeigt ist, randseitig einfasst. In der so gebildeten Vertiefung ist die Lage 13 des in Fig. 5 nicht gezeigten Haftverschlussteils 9 passend aufnehmbar. Durch Wahl der Höhe des jeweiligen Distanzkörpers 35 lassen sich an den jeweiligen Verbindungsstellen Abstände gewünschter Größen zwischen Bauteil 1 und Drittbauteil 3 realisieren, beispielsweise um ungleiche Bauhöhen der zu verbindenden Bauteile 1, 3 auszugleichen und/oder Zwischenräume zwischen den Bauteilen 1, 3 zu bilden, in denen Funktionselemente, wie Kabel oder Leitungen, verlegt werden können.

Bei den vorliegenden Ausführungsbeispielen sind die Verhakungselemente 15 der Haftverschlussteile 9 und 11 pilzkopfartig ausgebildet, wobei die jeweiligen Pilzköpfe über Stängel oder Stiele mit der jeweiligen Trägerlage 13 verbunden sind. Jedoch könnte auch seitens des Bauteils 1 oder des Drittbauteils 3 ein Haftverschlussteil in Form eines nicht näher dargestellten Flauschmaterials vorgesehen sein, das dann entsprechend mit den Pilzköpfen des anderen Haftverschlussteils verhakt. Des Weiteren besteht die Möglichkeit, männliche Verschlusselemente, wie Haken, Pilze und dergleichen, mit weiblichen Verschlusselementen, wie Schlaufen, in Hafteingriff zu bringen. In Frage kommende, verschiedenartige Bauweisen sind Stand der Technik, etwa in solchen Ausgestaltungen, wie sie in den zum Stand der Technik oben genannten Dokumenten, DE 10 2008 007 913 A1 oder DE 10 2010 027 394 A1, offenbart sind.

Bei den vorliegenden Ausführungsbeispielen ist an der Grundfläche 19 des Trägers 7 jeweils ein mittig angeordneter Zapfen 17 als Befestigungsmittel vorgesehen, der einstückig an den Träger 7 angeformt ist. Es versteht sich, dass mehr als ein Zapfen 17 am Träger 7 vorgesehen sein kann. Auch könnte das jeweilige Befestigungsmittel durch ein gesondertes Bauteil gebildet sein, das am Träger 7 befestigt ist, etwa durch Kleben oder eine Schraubverbindung. Anstelle eines im großen Ganzen runden Zapfens 17 könnte ein unrundes oder eckiges Element vorgesehen sein. Entsprechendes gilt für das Befestigungsloch 5. Anstelle des gezeigten Rundloches könnten unrunde oder eckige Öffnungen am Bauteil 1 vorgesehen sein, die so dimensioniert sind, dass mit Sicherungsteilen an einem vorspringenden Zapfen 17, sei er rund oder andersartig geformt, die Klippverbindung zustande kommt. Auch könnte anstatt des als Flachring dargestellten Ringes 31 ein andersartiges Dichtelement, etwa in Form eines O-Ringes oder Profilringes oder dergleichen, vorgesehen sein. Auch könnte anstelle der quadratischen Umrissform des Trägers 7 eine andere Rechteckform, eine Mehreckform oder eine runde oder ovale oder andersartige beliebige Umrissform für den Träger 7 vorgesehen sein. Anstelle der Benutzung von Haftverschlussteilen 9, 11 mit an einer Trägerlage 13 befindlichen Verhakungselementen 15 könnten diese, etwa in Form von Pilzköpfen, direkt aus dem Kunststoffwerkstoff des Trägers 7 gebildet sein.

## Patentansprüche

1. Befestigungsvorrichtung, bestehend aus mindestens einem an einem Bauteil (1) anbringbaren Halteteil (7), das an einer Seite ein flächiges Trägerteil (29; 35) aufweist, das mit an einer Seite vorstehenden Haft- oder Verhakungselementen (15) versehen ist und an der gegenüberliegenden Seite mindestens ein Befestigungsmittel (17) in Form eines hohlen Zapfens (17) für den Eingriff in ein Befestigungsloch (5) des Bauteils (1) aufweist, **dadurch gekennzeichnet, dass** zumindest am Zapfen (17) eine Dichteinrichtung in Form eines elastisch nachgiebigen Flachringes als Dichtring (31) zur Abdichtung zwischen dem Halteteil (7) und dem Befestigungsloch (5) vorhanden ist, der von dem Zapfen (17) durchgriffen ist, wobei am Zapfen (17) als Sicherungsteile, die beim Einstecken des Zapfens (17) in das Befestigungsloch (5) eine Sicherung durch Verklipsen bilden, zwei diametral zueinander angeordnete Rastnasen (21) vorgesehen sind, die mit dem Zapfen (17) einstückig geformt und in Ausschnitten (25) des hohlen Zapfens (17) beweglich sind und sich voneinander weg abspreizen, die sich beidseits der Rastnasen (21) in der Wandfläche (23) des Zapfens (17) in Axialrichtung erstrecken und dass der Flachring als Dichtring (31) auf dem Zapfen (17) angeordnet ist.

2. Befestigungsvorrichtung nach Anspruch 1, **dadurch gekennzeichnet, dass** die jeweilige Rastnase (21) bei der in das Befestigungsloch (5) eingesetzten Sicherungsposition den Rand des betreffenden Befestigungsloches (5) hintergreift.

3. Befestigungsvorrichtung nach einem der vorstehenden Ansprüche, **dadurch gekennzeichnet, dass** die Befestigungsvorrichtung derart ausgebildet ist, dass bei am Bauteil (1) festgelegtem Halteteil (7), der axiale Abstand zwischen der Unterseite der jeweiligen Rastnase (21) und der zugewandten Oberseite des Trägerteils (29; 35) kleiner gewählt ist als die Summe der Dicken-Maße von der elastisch nachgiebigen Dichteinrichtung (31) und dem Bauteil (1) im angrenzenden Bereich seines Befestigungsloches (5).

4. Befestigungsvorrichtung nach einem der vorstehenden Ansprüche **dadurch gekennzeichnet, dass** bei am Bauteil (1) festgelegtem Halteteil (7), die Dichteinrichtung (31) am Trägerteil (29; 35) ebenso flächig anliegt, wie am Bauteil (1) auf dessen einer Seite und dass die jeweilige Rastnase (21) auf der gegenüberliegenden Seite des Bauteils (1), das der Dichteinrichtung (31) abgewandt ist, an diesem Bauteil (1) mit einer vorgebbaren Haltekraft angreift, die sich aus der Rückstellkraft der elastisch vorgespannten Dichteinrichtung (31) in deren festgelegtem Zustand am Bauteil (1) ergibt.

5. Befestigungsvorrichtung nach einem der vorstehenden Ansprüche, **dadurch gekennzeichnet, dass** Halteteil (7), Zapfen (17) und Rastnasen (21) einstückig aus Kunststoff spritzgeformt sind.

6. Befestigungsvorrichtung nach einem der vorstehenden Ansprüche, **dadurch gekennzeichnet, dass** das jeweilige Trägerteil aus einer flachen Trägerplatte (29) gebildet ist oder zur Bildung eines Abstands zwischen seiner zur Anlage am Bauteil (1) vorgesehenen Grundfläche (19) und dem zugehörigen, die Haft- oder Verhakungselemente (15) aufweisenden Haftverschlussteil (9) als Distanzkörper (35) ausgebildet ist, der eine rechteckige Form mit einer die Auflagefläche (33) für das Haftverschlussteil (9) bildenden, randseitig von einem vorstehenden Rahmen (37) eingefasste Vertiefung aufweist.

7. Befestigungsvorrichtung nach Anspruch 6, **dadurch gekennzeichnet, dass** der Zapfen (17) an der zur Anlage am Bauteil (1) vorgesehenen, rechteckförmigen Grundfläche (19) des Halteteils (7) zentral gelegen ist.

8. Befestigungssystem zum Anbringen von Bauteilen (1), wie Blenden, Paneelen, oder dergleichen, an Drittbauteilen (3), wie Karosseriebauteilen, mit zumindest einer Befestigungsvorrichtung nach einem der Ansprüche 1 bis 7, wobei das Haftverschlussteil (9) mit einem korrespondierenden Haftverschlussteil (11) am Drittbauteil (3) in Eingriff bringbar ist.

## Claims

1. A fastening device, consisting of at least one holding part (7) attachable to a component (1), which has a flat carrier part (29; 35) on one side, which is provided with adhering or hooking elements (15) protruding on one side, and has at least one fastening means (17) on the opposite side in the form of a hollow pin (17) for engaging in a fastening hole (5) of the component (1), **characterised in that** there is at least on the pin (17) a seal unit in the form of an elastically yielding flat ring as a seal ring (31) for sealing between the holding part (7) and the fastening hole (5) through which the pin (7) passes, two catch lugs (21) arranged diametrically opposite one another being provided on the pin (17) as securing parts which, upon inserting the pin (17) into the fastening hole (5), form a safeguard by clipping, which catch lugs are moulded integrally with the pin (17) and can be moved in cutouts (25) of the hollow pin (17) and splay apart from one another, which cutouts extend in the axial direction on both sides of the catch lugs (21) in the wall surface (23) of the pin (17), and that the flat ring is disposed on the pin (17) as a seal ring (31).

2. The fastening device according to Claim 1, **characterised in that** the respective catch lug (21) engages behind the edge of the respective fastening hole (5) in the securing position inserted into the fastening hole (5).

3. The fastening device according to any of the preceding claims, **characterised in that** the fastening device is designed so that when the holding part (7) is fixed onto the component (1), the axial spacing between the bottom side of the respective catch lug (21) and the top side of the carrier part (29; 35) facing toward it is chosen to be less than the total of the thickness dimensions of the elastically yielding seal unit (31) and the component (1) in the adjoining region of its fastening hole (5).

4. The fastening device according to any of the preceding claims, **characterised in that** when the holding part (7) is fixed onto the component (1), the seal unit (31) presses as flatly against the carrier part (29; 35) as it does on the component (1) on one side thereof, and that the respective catch lug (1) on the opposite side of the component (1), which faces away from the seal unit (31), engages with this component (1) with a pre-definable holding force which results from the restoring force of the elastically pre-tensioned seal unit (31) in its fixed state on the component (1).

5. The fastening device according to any of the preceding claims, **characterised in that** the holding part (7), the pin (17) and the catch lugs (21) are integrally injection-moulded from plastic.

6. The fastening device according to any of the preceding claims, **characterised in that** the respective carrier part is formed from a flat carrier plate (29) or is made in the form of a spacer body (35) to form spacing between its footprint (19), provided for contact on the component (1), and the associated adhesive fastener part (9) having the adhering or hooking elements (15), said spacer body having a rectangular shape with a depression which forms the support surface (33) for the adhesive closure part (9) and is enclosed on the edges by a protruding frame (37).

7. The fastening device according to Claim 6, **characterised in that** the pin (17) is located centrally on the rectangular footprint (19) of the holding part (7) provided for contact on the component (1).

8. A fastening system for attaching components (1), such as plates, panels or the like, to third components (3) such as vehicle body parts, having at least one fastening device according to any of Claims 1 to 7, the adhesive closure part (9) being engageable with a corresponding adhesive closure part (11) on the third component (3).

## Revendications

1. Dispositif de fixation constitué d'au moins une partie (7) de maintien pouvant être mise sur un composant (1) et ayant sur une face une partie (29 ; 35) de support en deux dimensions, qui est pourvue d'élément (15) d'agrippage ou d'accrochage en saillie sur une face et qui a, sur la face opposée, au moins un moyen (17) de fixation, sous la forme d'un tenon (17) creux destiné à pénétrer dans un trou (5) de fixation du composant (1), **caractérisé en ce qu'**au moins sur le tenon (17) il y a un dispositif d'étanchéité, sous la forme d'une bague plate cédant élastiquement, comme bague (31) d'étanchéité, pour assurer l'étanchéité entre la partie (7) de maintien et le trou (5) de fixation, dans lequel pénètre le tenon (17),
dans lequel, sur le tenon (17), sont prévus, comme parties de sécurité qui forment, lorsque le tenon (17) est enfilé dans le trou (5) de fixation, une sécurité par clipsage, deux becs (21) d'encliquetage, qui sont disposés diamétralement l'un par rapport à l'autre, qui sont formés d'une seule pièce avec le tenon (17) et qui sont mobiles dans des encoches (25) du tenon (17) creux et s'écartent l'un de l'autre, lesquelles s'étendent dans la direction axiale, de part et d'autre des becs (21) d'encliquetage, dans la surface (23) de paroi du tenon (17), et **en ce que** la bague plate est disposée en tant que bague (31) d'étanchéité sur le tenon (17).

2. Dispositif de fixation suivant la revendication 1, **caractérisé en ce que** les becs (21) d'encliquetage respectifs s'accrochent en la position de sécurité insérés dans le trou (5) de fixation derrière le bord du trou (5) de fixation concerné.

3. Dispositif de fixation suivant l'une des revendications précédentes, **caractérisé en ce que** le dispositif de fixation est constitué de manière à ce que, lorsque la partie (7) de maintien est fixée au composant (1), la distance axiale, entre le côté inférieur du bec (21) d'encliquetage respectif et le côté supérieur de la partie (29 ; 35) de support, soit plus petite que la somme de la dimension en épaisseur du dispositif (31) d'étanchéité cédant élastiquement et du composant (1) dans la région voisine de son trou (5) de fixation.

4. Dispositif de fixation suivant l'une des revendications précédentes, **caractérisé en ce que**, lorsque la partie (7) de maintien est fixée au composant (1), le dispositif (31) d'étanchéité s'applique à la partie (29 ; 35) de support, à plat, tout comme au composant (1) sur l'une de ses faces et **en ce que** le bec (21) d'encliquetage respectif attaque ce composant (1), du côté du composant (1) éloigné du dispositif (31) d'étanchéité, avec une force de maintien pouvant être donnée à l'avance, qui provient de la force de rappel du dispositif (31) d'étanchéité précontraint élastiquement dans son état fixé au composant (1).

5. Dispositif de fixation suivant l'une des revendications précédentes, **caractérisé en ce que** la partie (7) de maintien, le tenon (17) et les becs (21) d'encliquetage sont moulés par injection en matière plastique d'une seule pièce.

6. Dispositif de fixation suivant l'une des revendications précédentes, **caractérisé en ce que** la partie de support respectif est formée d'une plaque (29) de support en deux dimensions ou, pour la formation d'une distance entre sa surface (19) de base prévue pour s'appliquer au composant (1) et la partie (9) de fermeture autoagrippante ayant les éléments (15) d'agrippage ou d'accrochage, est constituée sous la forme d'un intercalaire (35), qui a une forme rectangulaire en ayant une cavité formant la surface (33) d'application pour la partie (9) de fermeture autoagrippante et encadrée du côté du bord par un cadre (37) en saillie.

7. Dispositif de fixation suivant la revendication 6, **caractérisé en ce que** le tenon (17) est mis centralement sur la surface (19) de base rectangulaire prévue sur le composant (1) de la partie (7) de maintien.

8. Système de fixation pour mettre des composants (1), comme des diaphragmes, des panneaux ou analogues, sur des composants (3) tiers, comme des composants de carrosserie, comprenant au moins un dispositif de fixation suivant l'une des revendications 1 à 7, dans lequel la partie (9) de fermeture autoagrippante peut être mise en prise avec une partie (11) correspondante de fermeture autoagrippante sur le composant (3) tiers.
